# EUROPEAN PATENT SPECIFICATION

(11) **EP 1 626 001 B1**
(45) Date of publication and mention of the grant of the patent: **27.02.2008**
(21) Application number: 05077561.8
(22) Date of filing: 13.09.2000
(51) Int. Cl.: B64C 25/44, F16D 55/36, B60T 1/06

(54) **Multi-disc brake for aircraft**
Mehrscheibenbremse für Flugzeuge
Frein multidisques pour avions

(30) Priority: 13.09.1999 US 153510 P
(43) Date of publication of application: 15.02.2006
(62) Divisional of application: 00307900.1
(73) Proprietor: Goodrich Corporation, Charlotte, NC 28217-4578 (US)
(72) Inventor: Haydon, Thomas H., Troy, Ohio 45373 (US); Haugen, Derolle E., Dayton, Ohio 45459 (US); Christ, Franklin C., Pompton Plains, New Jersey 07444 (US); Ralea, Mihai, Boonton Township, New Jersey 07005 (US)
(74) Representative: Hartley, Andrew Philip

(56) References cited:
- EP-A- 0 936 373
- GB-A- 1 302 216
- US-A- 3 547 234
- US-A- 4 703 837

## Description

### FIELD OF THE INVENTION

The invention herein described relates generally to brake assemblies and more particularly to aircraft landing gear and aircraft landing gear with an integrated brake actuation system.

### BACKGROUND OF THE INVENTION

One embodiment of the invention relates to aircraft brake assemblies.

Aircraft brake assemblies have traditionally been comprised of three major functional components, a torque tube, an actuator assembly and a heat sink (brake disk stack). These components are assembled into a brake assembly, which is known as a Line Replaceable Unit (LRU). An LRU is removed and replaced on a flight line as a single component. Accordingly, if one of the major functional components requires repair or replacement, removal of the entire LRU is effected for transfer of the LRU to a speciality shop for disassembly, repair and acceptance testing. This is an inefficient use of resources when one of the components requires more frequent servicing than the other components. Also, stocking of the present day LRUs comprising the three above-mentioned functional components.

US-A-3,547,234 discloses a brake assembly having the features of the preamble of claim 1. Another brake assembly is disclosed in GB-A-1302216.

### SUMMARY OF THE INVENTION

According to the invention, there is provided a brake assembly comprising a wheel support for rotatably mounting a wheel, a torque transfer member coupled to the wheel support for transfer of torque from a brake disk stack to the wheel support during braking, the brake disk stack being supported on the torque transfer member, and an actuator assembly mounted on the wheel support for applying braking force to the brake disk stack, characterized in that the brake disk stack and torque transfer member are removable from the wheel support without removal of the actuator assembly and without disturbing the actuator assembly.

When applied to an aircraft brake assembly, the present invention provides a different such assembly, wherein the actuator portion of the brake assembly is no longer provided as part of the brake assembly but instead as part of the aircraft landing gear. Accordingly, the actuator portion or individual actuators assemblies are designated as LRUs, which are replaceable independently of other brake components, e.g., the torque tube and heat sink, which then comprise the brake assembly designated as a separate LRU. This new arrangement is particularly suited to electro-mechanically actuated brakes, where actuator maintenance intervals will typically be more closely related to landing gear maintenance intervals than to brake maintenance (i.e., hydraulic actuator and/or heat sink maintenance).

In a preferred embodiment, the brake disk stack is carried on the torque transfer member and removable therewith as a unit from the wheel support. The actuator includes a plurality of actuator modules individually removably mounted to the wheel support. The wheel support has at least one flange thereon to which the actuator modules are mounted, and the actuator modules have at least one mounting flange secured to an outboard side of the at least one flange. More generally, the actuator modules have one or more mounting flanges abutting axially outwardly facing mounting surfaces on the wheel support. The torque transfer member may be a torque tube having a mounting ring, and the mounting ring may be retained on the wheel support by a retainer and a thrust bearing interposed between the retainer and the mounting ring.

In an embodiment of the invention, the torque transfer member may be relatively rotatable on the wheel support, and the torque transfer member and wheel support may include a cooperating lug and recess interengaged to transfer torque from the torque transfer member to the wheel support. A load transducer may be interposed between the lug and recess for sensing the transferred braking load.

The foregoing and other features of the invention are hereinafter fully described and particularly pointed out in the claims, the following description and the annexed drawings setting forth in detail one or more illustrative embodiments of the invention, such being indicative, however, of but one or a few of the various ways in which the principles of the invention may be employed.

### BRIEF DESCRIPTION OF THE DRAWINGS

Fig. 1 is a schematic lay-out view of a wheel, brake and axle assembly according to the invention.
Fig. 2 is a schematic cross-sectional view of the wheel, brake and axle assembly of Fig. 1, taken along the line 2-2 of Fig. 2.
Fig. 3 is a perspective view of a representative actuator module that may be used in the wheel and brake assembly of Fig. 1.
Fig. 4 is a cross-sectional view of the actuator module of Fig. 3.
Fig. 5 is a schematic lay-out view of another embodiment of wheel, brake and axle assembly according to the invention.
Fig. 6 is a schematic cross-sectional view of the wheel, brake and axle assembly of Fig. 5, taken along the line 6-6 of Fig. 5.

### DETAILED DESCRIPTION OF THE INVENTION

Because the invention was conceived and developed for use in an aircraft braking system, it will be herein described chiefly in this context. However, the principles of the invention in their broader aspects can be adapted to other types of braking systems, such as in train braking systems.

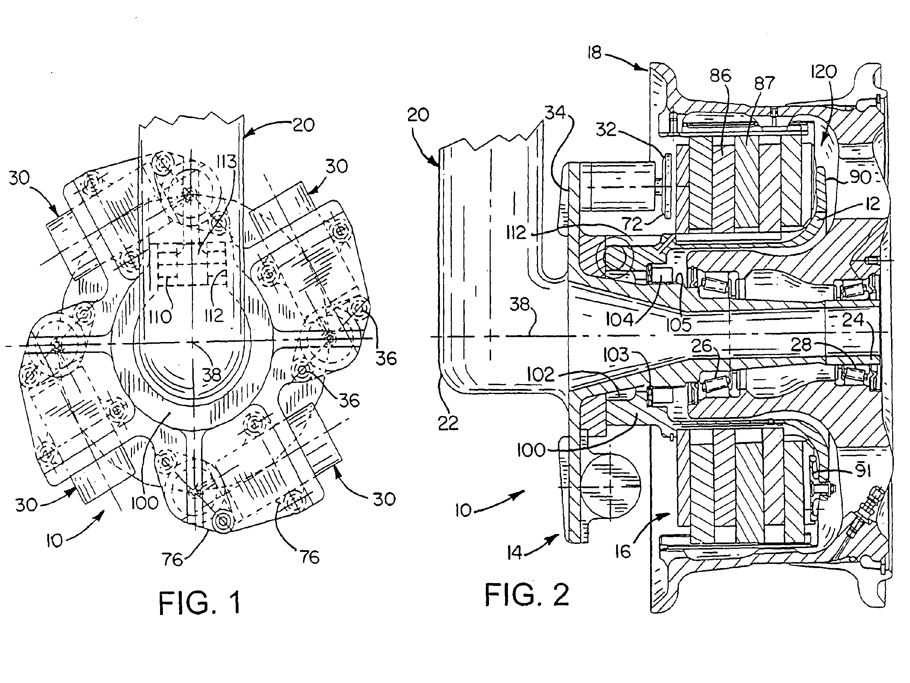

Referring now in detail to the drawings and initially to Figs. 1 and 2, a wheel and brake assembly according to the present invention is generally indicated at 10. The assembly 10 generally comprises a torque tube 12, an actuator assembly 14, a brake disk stack (heat sink) 16, a wheel 18 and a wheel support 20. In the illustrated embodiment the wheel support 20 is a landing gear strut 22 provided with an axle 24. The wheel 18 is supported for rotation by inboard and outboard bearings 26 and 28 on the axle 24.

The actuator assembly 14 comprises one or more actuator modules 30 which include respective actuator rams 32. The actuator modules 30 are individually mounted to one or more support flanges 34 by removable bolt fasteners 36 or other suitable means enabling quick and easy attachment and detachment of the actuator modules to and from the flanges 34. As shown in Fig. 1, a plurality of the actuator modules 30 are mounted in a circular arrangement around the rotational axis 38 of the wheel, preferably with the actuator rams 32 circumferentially equally spaced apart. Electrical connectors (not shown) may be provided to effect quick and easy electrical connection of the actuators to a brake controller (not shown). The controller may include a corresponding number of independent servo amplifiers, a microprocessor with associated peripherals, and data input/output (I/O) circuitry. Details of the controller are not being described herein as the invention does not reside in the type of controller or other circuitry used to control operation of the actuator modules.

In the illustrated embodiment, the support flanges 34 are integrally joined to the axle 24 and radiate from the axle in a generally symmetric pattern. However, it will be appreciated that the flanges may be integrated in the axle or strut, or the wheel support in general. Also, the flanges may by removably attached to the axle by suitable means, such as by fasteners to a mounting flange or other mounting structure on the axle, strut or wheel support in general. The flanges may also be formed by respective portions of a continuous flange, such as an annular flange surrounding the axle. This annular flange may be removably mounted to the axle, strut or wheel support in general, for removal of the actuator assembly 14 as a unit.

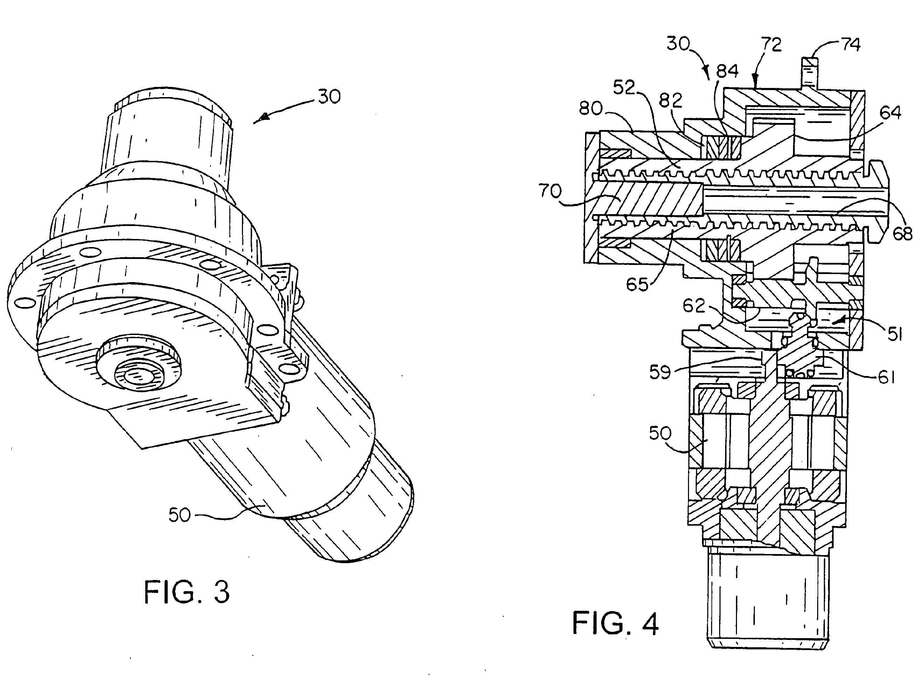

Preferably, the modules 30 are identical and interchangeable, and a representative one of the actuator modules is shown in Figs. 3 and 4. Each actuator module 30 includes an electric motor 50, a gear train 51, and a ball screw assembly 52. The gearing 51 includes a pinion 59 on the drive shaft of the electric motor 50, a first-stage transfer gear member 60 in mesh at it input end with the pinion, a second stage transfer gear member 62 in mesh at its input end with the output end of the first stage gear member, and a ball nut gear 64 in mesh with the output end of the second stage gear. The ball nut gear may be formed integrally with the ball nut 65 of the ball screw assembly 52 (although reference herein is made to certain structures as being integral as is preferred, it should be understood such structures alternatively may be composed of discrete components joined together to form a functionally equivalent structure).

The ball screw assembly 52 is comprised of the ball nut 65 with the integral gear 64, a ball screw 68 that moves linearly upon rotation of the ball nut, an anti-rotation guide 70 extending into the hollow interior of the ball screw, and a ram pad 72 (Fig. 2) that attaches to the end of the ball screw' and provides an insulating interface with the brake disk stack (Fig. 2). The ball screw and ball nut generally may be of a known configuration and thus the respective spiral grooves thereof and associated balls have not been illustrated as the same would be immediately evident to one skilled in the art. Also, other rotary to linear motion conversion devices may by employed, if desired, with the linear moving member coinciding with the ball screw and functioning as the actuator ram. In the illustrated ball screw assembly, the interior bore of the screw and the anti-rotation guide have corresponding polygonal cross-sections defined by plural inner/outer side surfaces which rotationally interfere with one another to restrain rotation of the screw relative to the housing. As is preferred and illustrated, one or more of the side surfaces, most preferably all of the side surfaces, are planar and form regular polyhedrons providing a close sliding fit between the ball screw and the guide rod. It will be appreciated, however, that other configurations may be used although less preferred.

The motor 50, gearing 51 and ball screw assembly 52 are all carried in a module housing 72. The housing 72 includes a mounting flange 74 which may be a continuos flange extending completely or, as illustrated, partway around the casing. The mounting flange alternatively may be composed of discrete elements such as lugs. In the schematic renderings of Figs. 1 and 2, the depicted mounting flange can be seen to be composed of lugs 76 protruding at strategic locations from the sides of the housing.

In accordance with the invention, the mounting flanges 74 of the actuator modules 30 are preferably abuttedly engaged with the outboard sides of the respective support flanges 34, i.e., the side thereof nearest the brake disk stack 16. This is advantageous because the axial braking loads will then be passed from the actuator to the flange without passing through removable fasteners or other devices used to attach the actuator modules to the flanges and which would be subjected to tensile loads. Accordingly, one or more smaller and lighter fasteners can be used to effect such attachment, as they need not be design rated to carry the large axial tension loads encountered during braking. Preferably, the actuators and flanges are configured to enable removal of the actuators from the flanges without disturbing the brake assembly consisting of the brake disks and torque tube. If needed, the ram pad may be removed to facilitate removal of the actuator. The actuator housing may also be provided with a spiral flange for bayonet-like assembly to the flange, which is provided with a mating spiral surface.

In addition, it may be desirable to design the actuator module 30 such that the axial loads are carried by a major housing portion that abuttedly engages the outboard side of the mounting flange directly or through a mounting flange thereon, rather than by fasteners. This would enable further weight reduction. As seen in Fig. 4, the housing 72 may be primarily composed of an outer housing member or casing 80 that includes the mounting flange 74 integrally therewith. The casing 80 has an axially facing shoulder surface 82 with bears the axial reactionary loads generated by the ball screw assembly 52 during braking. As shown, the ball nut 65 bears against such shoulder surface via an axial thrust bearing 84.

Reverting to Figs. 1 and 2, the brake disk stack 16 is composed of stationary brake elements and rotary brake elements that are interleaved and surround the torque tube 12. The stationary and rotary brake elements are in the form of stator disks 86 and rotor disks 87. The stator disks 86 are splined to the torque tube 12 and the rotor disks 87 are splined to the wheel 18 interiorly of the wheel's rim. As is conventional, the splined connection may be effected by a plurality of spline or drive keys that are spaced around the circumference of the rim/torque tube to permit axial movement of the rotor/stator disks while being held to the wheel/torque tube against relative rotation.

The disk stack 16 is located between a back pressure member 90 and the actuator rams of the actuator assembly. The back pressure member 90 is formed by a radial flange at the outer end of the torque tube 12. The radial flange carries thereon a plurality of circumferentially spaced torque pucks 91 engaged with the last brake disk at the rear end of the disk stack 16.

The torque tube 12 has at its inboard end a mounting ring or flange 100 which has a contoured counterbore that fits over a correspondingly contoured locating collar 102 on the axle 24. When the torque tube is telescoped over the axle and the counterbored end portion thereof is seated against the locating collar, the torque tube can be axially retained by a thrust bearing 103 and a retainer nut 104 threaded onto a threaded portion 105 of the axle 24. The thrust bearing is interposed between the retainer nut and an axially outwardly facing shoulder surface on the interior wall of the torque tube at it inboard end. Preferably, the thrust bearing is lightly pre-loaded by the retainer nut to minimize the amount of braking torque reacted through the axle. This allows essentially all of the braking torque to be reacted through a load transducer 110 incorporated as part of the landing gear.

The mounting ring 100 includes a recess (socket) 112 for receiving the load transducer and a torque take-out lug 113 provided on the axle 24 or elsewhere on the wheel support 20. The torque take-out lug and recess are rotationally interlocked and function as an interlace between the torque tube and the landing gear axle structure. The output of the load cell 110 will be indicative of brake torque, and the load cell output may be supplied to a brake controller for use in controlling the braking operation.

Although it will be immediately evident to those skilled in the art, the purpose of the brake actuator(s) is to impress a clamping force on a stack of brake disk elements. The electromechanical (EM) actuators operate simultaneously to produce a clamping force between a brake reaction or back pressure member 90 and the actuator output rams 32. The size and number of actuators may be varied to provide the total brake clamping force required.

The thrust bearing 103 can be eliminated if the brake torque transducer 110 is integrated into the axle or landing gear. In such design, the brake structure can be rigidly connected to the axle such as by using a bolted flange joint, a combination of bolts and studs, etc.

In view of the foregoing, it will now be appreciated that there is provided a wheel and brake assembly that enables the brake assembly (brake disk stack and torque tube), indicated at 120, to be replaced without disturbing the actuators 30. More, particularly, the torque tube 12 can be removed without removal of and without disturbing the actuators 30. This eliminates possible handling damage of the actuators during brake removal. To retain the brake disks on the torque tube when the brake assembly is removed, a snap ring may be provided.

In addition, individual actuators 30 can be replaced as an LRU without disturbing the remaining actuators or the brake assembly 120. Also, the brake assembly, sans actuators, is lighter in weight and easier to handle.

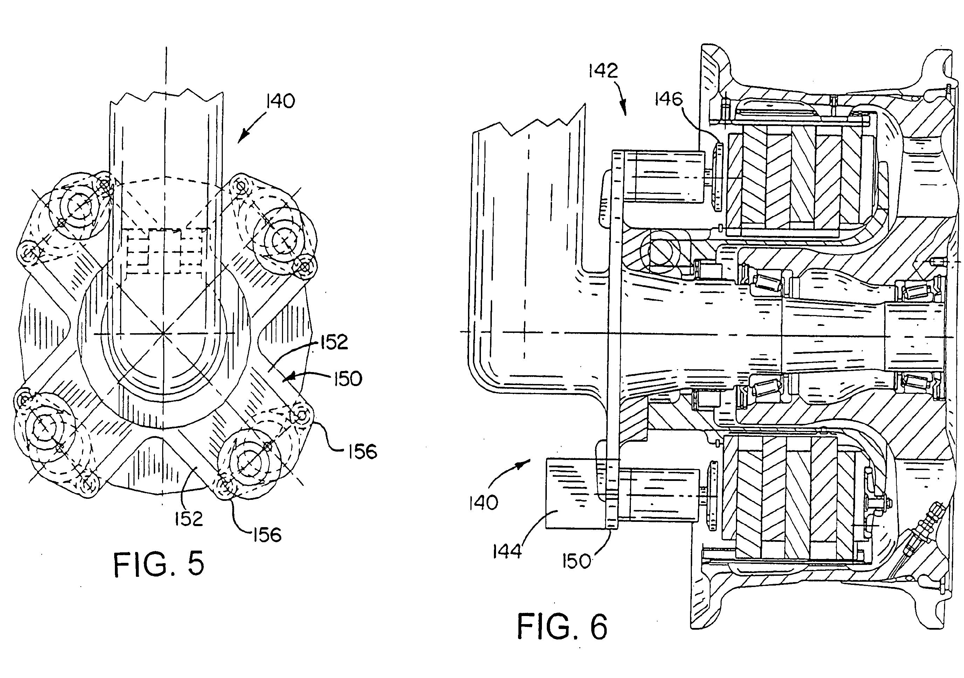

In Figs. 5 and 6, another embodiment of brake and wheel assembly is illustrated. The assembly 140 is the same as the above-described assembly, except for the actuator assembly 142. In the Figs. 1 and 2 embodiment, the motor 144 is oriented with its axis perpendicular to the axis of the ram 146. In the Figs. 5 and 6 embodiment, the motor is oriented with its axis parallel with the ram axis. This arrangement is more conducive to locating the motor more remote from the brake assembly including the torque tube and brake disks. The flanges 150 to which the actuators are mounted will include an aperture for passage of the motor and/or gear train connecting the motor to the ram. As shown, the flanges each may include a pair of generally radially outwardly extending arms 152 that are parallel and spaced apart to receive therebetween the actuator assembly. The actuator assembly includes a mounting flange in the form of opposed lugs through which fasteners extend to secure the actuator assembly to the mounting flanges. As shown, the lugs 156 are disposed on the outboard side of the mounting arms. The arms of each flange may be interconnected by a web extending therebetween, if desired, or the arms may be formed by respective portions of a continuous flange.

## Claims

1. A brake assembly comprising a wheel support (20) for rotatably mounting a wheel (18), a torque transfer member (12) coupled to the wheel support (20) for transfer of torque from a brake disk stack (16) to the wheel support (20) during braking, the brake disk stack (16) being supported on the torque transfer member (12) and an actuator assembly (14) mounted on the wheel support (20) for applying braking force to the brake disk stack (16), **characterized in that** the brake disk stack (16) and torque transfer member (12) are removable from the wheel support (20) without removal of the actuator assembly (14) and without disturbing the actuator assembly (14).

2. A brake assembly as set forth in claim 1, wherein the brake disk stack (16) is carried on the torque transfer member (12) and removable therewith as a unit from the wheel support (20).

3. A brake assembly as set forth in claim 1, wherein the actuator assembly (14) includes a plurality of actuator modules (30) individually removably mounted to the wheel support (20).

4. A brake assembly as set forth in claim 3, wherein the wheel support (20) has at least one flange (34) thereon to which the actuator modules (30) are mounted.

5. A brake assembly as set forth in claim 4, wherein the actuator modules (30) have a mounting flange (74) secured to an outboard side of the at least one flange.

6. A brake assembly as set forth in claim 3, wherein the actuator modules (142) have mounting flanges (150) abutting axially outwardly facing mounting surfaces on the wheel support.

7. A brake assembly as set forth in claim 1, wherein the torque transfer member is a torque tube (12) having a mounting ring (100), and wherein the mounting ring (100) is retained on the wheel support (20) by a retainer (104) and a thrust bearing (103) interposed between the retainer (104) and the mounting ring (100).

8. A brake assembly as set forth in claim 1, wherein the torque transfer member (12) is relatively rotatable on the wheel support (20), and the torque transfer member (12) and wheel support (20) include a cooperating lug (113) and recess (112) interengaged to transfer torque for the torque transfer member (12) to the wheel support (20).

9. A brake assembly as set forth in claim 8, including a load transducer (110) interposed between the lug (113) and recess (112) for sensing the transferred braking load.

## Patentansprüche

1. Bremsvorrichtung mit einer Radhalterung (20) zur drehbaren Befestigung eines Rads (18), einem mit der Radhalterung (20) verbundenen Drehmomentübertragungstell (12) zum Übertragen eines Drehmoments von einem Bremsscheibenstapel (16) auf die Radhalterung (20) während des Bremsens, wobei der Bremsscheibenstapel (16) an dem Drehmomentübertragungsteil (12) und einer an der Radhalterung (20) montierten Betätigungsvorrichtung (14) gelagert ist, um Bremskraft auf den Bremsscheibenstapel (16) auszuüben,
**dadurch gekennzeichnet, dass** der Bremsscheibenstapel (16) und das Drehmomentübertragungsteil (12) von der Radhalterung (20) abgenommen werden können, ohne die Betätigungsvorrichtung (14) zu entfernen und ohne die Betätigungsvorrichtung (14) zu stören.

2. Bremsvorrichtung nach Anspruch 1, bei der der Bremsscheibenstapel (16) an dem Drehmomentübertragungsteil (12) gehalten ist und zusammen mit diesem als Einheit von der Radhalterung (20) entfernbar ist.

3. Bremsvorrichtung nach Anspruch 1, bei der die Betätigungsvorrichtung (14) mehrere Betätigungsmodule (30) aufweist, die einzeln abnehmbar an der Radhalterung (20) montiert sind.

4. Bremsvorrichtung nach Anspruch 3, bei der an der Radhalterung (20) mindestens ein Flansch (34) ausgebildet ist, an dem die Betätigungsmodule (30) montiert sind.

5. Bremsvorrichtung nach Anspruch 4, bei der die Betätigungsmodule (30) einen Befestigungsflansch (74) aufweisen, der an einer Außenseite des mindestens eines Flansches befestigt ist.

6. Bremsvorrichtung nach Anspruch 3, bei der die Betätigungsmodule (142) Befestigungsflansche (150) aufweisen, die an axial nach außen gerichteten Befestigungsflächen an der Radhalterung anliegen.

7. Bremsvorrichtung nach Anspruch 1, bei der das Drehmomentübertragungstell ein Verdrehrohr (12) mit einem Befestigungsring (100) ist und bei der der Befestigungsring (100) mitttels eines Rückhalteteils (104) und eines zwischen dem Rückhalteteil (104) und dem Befestigungsring (100) angeordneten Drucklagers (103) an der Radhalterung (20) gehalten ist.

8. Bremsvorrichtung nach Anspruch 1, bei der das Drehmomentübertragungsteil (12) relativ an der Radhalterung (20) drehbar ist, und das Drehmomentübertragungsteil (12) und die Radhalterung (20) einen Vorsprung (113) und eine Ausnehmung (112) zum Zusammenwirken miteinander aufweisen, die zusammengreifen, um Drehmoment für das Drehmomentübertragungsteil (12) zu der Radhalterung (20) zu übertragen.

9. Bremsvorrichtung nach Anspruch 8, mit einem zwischen dem Vorsprung (113) und der Ausnehmung (112) angeordneten Last-Messwandler (110) zum Detektieren der übertragenen Bremslast.

## Revendications

1. Ensemble de frein comprenant un support de roue (20) pour monter de manière rotative une roue (18), un élément de transmission de couple (12) couplé au support de roue (20) pour transmission du couple d'une pile de disques de frein (16) au support de roue (20) pendant le freinage, la pile de disques de frein (16) étant supportée par l'élément de transmission de couple (12), et un ensemble actionneur (14) monté sur le support de roue (20) pour appliquer la force de freinage à la pile de disques de frein (16), **caractérisé en ce que** la pile de disques de frein (16) et l'élément de transmission de couple (12) peuvent être démontés du support de roue (20) sans démonter l'ensemble actionneur (14) et sans perturber l'ensemble actionneur (14).

2. Ensemble de frein selon la revendication 1, dans lequel la pile de disques de frein (16) est portée par l'élément de transmission de couple (12) et peut, d'un seul bloc, être extrait avec celui-ci du support de roue (20).

3. Ensemble de frein selon la revendication 1, dans lequel l'ensemble actionneur (14) comprend une pluralité de modules actionneurs (30) fixés individuellement de manière amovible au support de roue (20).

4. Ensemble de frein selon la revendication 3, dans lequel le support de roue (20) comporte au moins une bride (34) sur laquelle sont fixés les modules actionneurs (30).

5. Ensemble de frein selon la revendication 4, dans lequel les modules actionneurs (30) comportent une bride de montage (74) fixée sur un côté extérieur de la au moins une bride.

6. Ensemble de frein selon la revendication 3, dans lequel les modules actionneurs (142) présentent des brides de montage (150) venant en contact axialement avec des surfaces orientées vers l'extérieur, ménagées sur le support de roue.

7. Ensemble de frein selon la revendication 1, dans lequel l'élément de transmission de couple est un tube de couple (12) équipé d'un anneau de montage (100), et dans lequel l'anneau de montage (100) est maintenu sur le support de roue (20) par un élément de retenue (104) et un palier de butée (103) interposé entre l'élément de retenue (104) et l'anneau de montage (100).

8. Ensemble de frein selon la revendication 1, dans lequel l'élément de transmission de couple (12) est relativement rotatif sur le support de roue (20), et l'élément de transmission de couple (12) et le support de roue (20) comprennent une patte (113) et un évidement (112) en coopération, imbriqués pour transmettre le couple pour l'élément de transmission de couple (12) au support de roue (20).

9. Ensemble de frein selon la revendication 8, comprenant un transducteur d'effort (110) interposé entre la patte (113) et l'évidement (112) pour détecter l'effort de freinage transmis,
